# EUROPÄISCHE PATENTSCHRIFT

(11) **EP 1 468 811 B1**
(45) Veröffentlichungstag und Bekanntmachung des Hinweises auf die Patenterteilung: **26.07.2006**
(21) Anmeldenummer: 04100699.0
(22) Anmeldetag: 23.02.2004
(51) Int. Cl.: B29C 65/08

(54) **Verfahren zum Ultraschallschweissen von Kunststoffkomponenten**
Process for ultrasonic welding of plastic components
Procédé pour le soudage par ultrasons de composants plastiques

(30) Priorität: 19.04.2003 DE 10318321
(43) Veröffentlichungstag der Anmeldung: 20.10.2004
(73) Patentinhaber: Degussa AG, 40474 Düsseldorf (DE)
(72) Erfinder: Monsheimer, Sylvia, 45721 Haltern am See (DE); Göring, Rainer, 46325 Borken (DE); Ries, Hans Dr., 45772 Marl (DE); Brudny, Günter, 45772 Marl (DE)

(56) Entgegenhaltungen:
- EP-A- 0 242 480
- US-A- 5 879 115
- PATENT ABSTRACTS OF JAPAN Bd. 0072, Nr. 30 (M-249), 12. Oktober 1983 (1983-10-12) -& JP 58 122822 A (MATSUSHITA DENKO KK), 21. Juli 1983 (1983-07-21)

## Beschreibung

Gegenstand der Erfindung ist eine Methode zur Verbindung einer ein- oder mehrschichtigen Rohrleitung mit einem Quickconnector.

Bekannt sind Verbindungen zwischen Rohr und Kunststoffteil, bei denen das Rohr auf das Kunststoffteil aufgedornt wird. Dabei wird das Rohr aufgeweitet, um den Nippel des Kunststoffteils aufzunehmen. Das Rohr zeichnet danach, falls vorhanden, das Profil des Nippels nach. An diese Verbindung wird der Anspruch gestellt, möglichst permeations- und leckagedicht zu sein, hohe Auszugskräfte auszuhalten und verdrehsicher zu sein. Speziell bei der Verbindung von Kraftstoffleitung und Quickconnector ist außerdem die Verwendung eines sogenannten "wedding bands" bekannt (DE 41 27 039 A1). Das "wedding band" wird vor dem Aufdornen auf das Rohr aufgeschoben und beim Aufdornen ebenfalls geweitet, so dass die Auszugskräfte durch das zusätzliche Material erhöht werden.

JP-A-58,122822 zeigt ein Verfahren zum Verbinden eines Kunststoffrohrs mit einem anderen Kunststoffteil mittels Ultraschallschweißen, wobei
die Schallwellen längs zur Rohrachse wirken, wohingegen die zu verschweißenden Flächen im wesentlichen parallel zur Rohrachse angeordnet sind, und weiterhin der Schweißvorgang mit dem Eintreiben des anderen Kunststoffteils in das Kunststoffrohr so kombiniert wird, dass die Beschallung zumindest überlappend mit dem Eintreiben vorgenommen wird.

Besonders bei hohen Temperaturen, wie sie im Motorraum eines Kraftfahrzeugs vermehrt auftreten können, leiden die Fähigkeiten der aufgedornten Verbindung. Die Auszugsfestigkeit und die Verdrehsicherheit lassen stark nach, so dass die Dichtigkeit der Verbindung unter Umständen nicht mehr gewährleistet ist. Auch bei anderen Anwendungen, beispielsweise in der Medizintechnik, muss die Dichtigkeit und Steifigkeit der Verbindung gewährleistet sein.

Eine Möglichkeit, dieses Problem zu beseitigen, ist, die beiden zu verbindenden Komponenten zu verschweißen, beispielsweise durch Warmgasziehschweißen, Infrarotschweißen, Elektromuffenschweißen oder mittels eines Hochfrequenzfeldes. Das am häufigsten eingesetzte Verfahren in der Kunststofftechnik ist das Ultraschallschweißen. Als Ultraschall wird der Schall im Frequenzbereich jenseits des vom Menschen hörbaren Bereichs von 20 kHz bis hin zu Frequenzen von 1 GHz bezeichnet. Die Schwingungsanregung erfolgt beim Ultraschallschweißen in der Praxis auf elektrischem Wege, wobei in einem Generator elektrische Schwingungen erzeugt werden. Durch das beim Ultraschallschweißen grundsätzlich angewandte piezoelektrische Wandlerprinzip ist es möglich, die elektrische Generatorleistung mit einem sehr hohen Wirkungsgrad in mechanische Energie umzuwandeln. Somit entstehen aus elektrischen Schwingungen mechanische Schwingungen gleicher Frequenz. Übliche Ultraschallfrequenzen für das Kunststoffschweißen liegen zwischen 15 und 40 kHz, jedoch ist auch das Arbeiten mit wesentlich höheren Frequenzen (z. B. bis 1010 kHz) möglich.

Die Schallwandler (Konverter) schwingen stets longitudinal, was bedeutet, dass die Ausbreitungsrichtung und Schwingungsrichtung zusammenfallen. Der Konverter ist über ein Amplitudentransformationsstück an das energieleitende Schweißwerkzeug, die sogenannte Sonotrode, angekoppelt. Mit Hilfe der Sonotrode wird die Longitudinalwelle weitestgehend in das zu verschweißende Werkstück eingeleitet. In der Fügezone werden zunächst durch Grenzflächenreibung und dann sowohl durch Grenzflächen- als auch durch Molekularreibung die Schallwellen in Wärme umgewandelt. Die Fügezone schmilzt auf und durch den Sonotrodendruck kommt es zum Schmelzefluss. Entsprechende Verfahren sind beispielsweise aus W. Land, Kunststoffe 68 (1978) 4, S. 233-237 bekannt. Bisher sind allerdings nur Anordnungen bekannt, bei denen die Bewegung der Sonotrode senkrecht zu der zu verschweißenden Fläche stattfindet. Falls die zu verschweißende Fläche profiliert ausgeführt ist, wie z. B. ein Tannenzapfen- oder auch Olivenprofil auf dem Stem eines Quickconnectors, so sind nicht die Oberflächen des Profils gemeint, sondern die Zylindermantelfläche des Stem. Das Profil verhält sich dann wie ein Energierichtungsgeber, der eine Energiekonzentration mit definierter Start- (Zündungs-) und Schweißzone ergibt. Wird nun ein Rohr mit einem Quickconnector verschweißt, so sind die zu verschweißenden Teile einmal um die eigene Achse zu drehen, damit eine ringförmige Schweißnaht entstehen kann. Dies kann, falls die einzelnen Komponenten sperrig sind, zu Problemen führen. Zudem müssen vor dem Schweißprozess die zu verschweißenden Flächen übereinander gebracht werden. Dies heißt für die Verbindung von Rohr und Quickconnector, dass der Prozess des Aufdornens nach wie vor als erstes durchgeführt werden muss. Der Einsatz des Ultraschallschweißens herkömmlicher Art stellt damit für die obengenannte Verbindung keine Vereinfachung hinsichtlich des Verfahrens dar, sondern einen zusätzlichen Arbeitsschritt.

Somit stellt sich die Aufgabe, das bekannte Verfahren des Ultraschallschweißens von Verbindungselementen zu vereinfachen, wobei hinsichtlich der Haltbarkeit der Schweißnaht keine Verschlechterung resultieren sollte.

Diese Aufgabe wird überraschenderweise mit einem Verfahren zum Verbinden eines Kunststoffrohrs mit einem Quickconnector gelöst, bei dem die Schallwellen längs zur Rohrachse wirken, wohingegen die zu verschweißenden Flächen im wesentlichen parallel zur Rohrachse angeordnet sind, und weiterhin der Schweißvorgang mit dem Eintreiben des anderen Kunststoffteils in das Kunststoffrohr so kombiniert wird, dass die Beschallung zumindest überlappend mit dem Eintreiben und bevorzugt im wesentlichen gleichzeitig mit dem Eintreiben vorgenommen wird, wobei während des Eintreibens eine Aufweitung des Rohrs stattfindet.

Das Kunststoffrohr dient üblicherweise der Führung von Treibstoffen, Lösemitteln, Ölen, Pflanzenschutzmitteln oder ähnlichem. In einer bevorzugten Ausführungsform ist es eine Kraftfahrzeugrohrleitung, insbesondere eine Kraftstoffleitung, eine Kühlflüssigkeitsleitung, eine Bremsflüssigkeitsleitung, eine Hydraulikflüssigkeitsleitung oder eine Scheibenwaschanlagenleitung. Das Rohr kann ein- oder mehrschichtig sein; bis zu sieben Schichten sind zur Zeit technisch realisierbar, wobei der mehrschichtige Aufbau durch die Notwendigkeit einer Sperrschicht begründet sein kann, welche die Permeation von Kraftstoffkomponenten behindert. Während die Funktionsschichten in der Regel aus einer Formmasse auf Basis von Polyamid oder Polyolefin bestehen, besteht die Sperrschicht aus einer Formmasse auf Basis von beispielsweise Polyester, Fluorpolymer oder Ethylen/Vinylalkohol-Copolymer. Eine gegebenenfalls vorhandene antielektrostatische Innenschicht besteht aus einer Formmasse, die durch Zusatz einer elektrisch leitfähigen Komponente wie etwa Leitfähigkeitsruß oder Graphitfibrillen antistatisch ausgerüstet wurde. Entsprechende Rohre sind Stand der Technik und in vielen Publikationen beschrieben. Sie können durch konventionelle Extrusion oder Coextrusion mittels einer Rohr- oder Scheibenkalibrierung hergestellt werden oder mittels formgebender Backen (Wellrohrabzug). Auch das Blasformen, beispielsweise das Saugblasformen oder das Blasformen mittels Schlauchmanipulation, sind als Herstellverfahren entsprechender Ein- oder Mehrschichtrohre bekannt.

Der Quickconnector hat wenigstens einen Nippel, der zur Verbindung mit dem Rohr vorgesehen ist. Dieser Nippel kann glatt ausgeführt sein, aber auch auf der Außenseite mit einem Profil versehen sein, wie z. B. ein Tannenzapfenprofil oder ein Olivenprofil.

Der Quickconnector besteht meist aus einem einzigen Material, kann jedoch auch aus mehreren verschiedenen Materialien bestehen und wird dann beispielsweise durch Mehrkomponentenspritzgießen hergestellt. Das Material kann auch verstärkt sein, etwa mittels Glas- oder Carbonfasern, oder es kann antielektrostatisch ausgerüstet sein, wofür ebenfalls Carbonfasern, aber auch Leitfähigkeitsruß, Graphitfibrillen oder jeder andere geeignete Zusatz in Frage kommt. Zu diesem Zweck kann es ganz aus elektrisch leitfähig ausgerüstetem Material bestehen oder innen und/oder außen mit einer elektrisch leitfähig ausgerüsteten Schicht bekleidet sein.

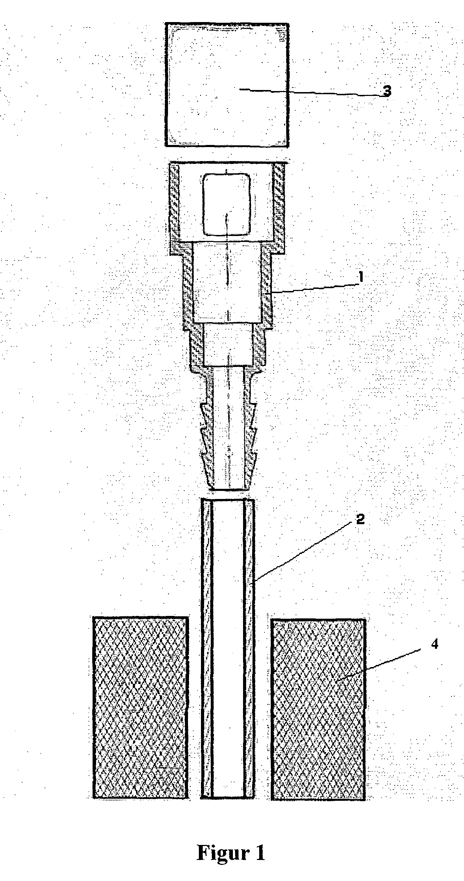

Das erfindungsgemäße Verfahren soll anhand der Figuren 1 bis 3 näher erläutert werden.

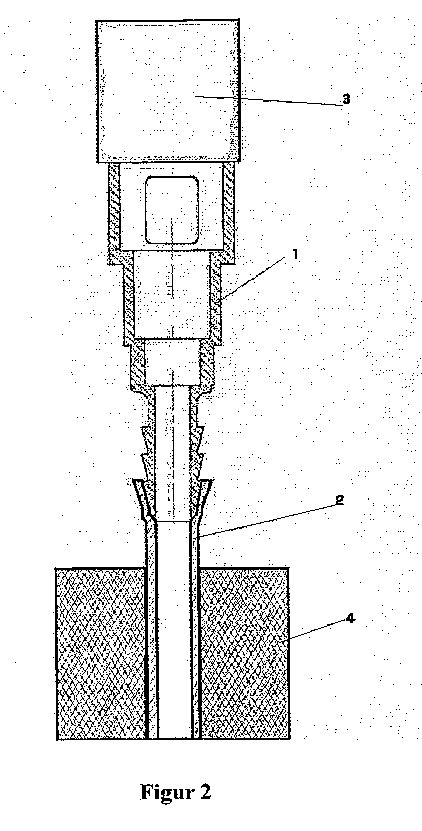

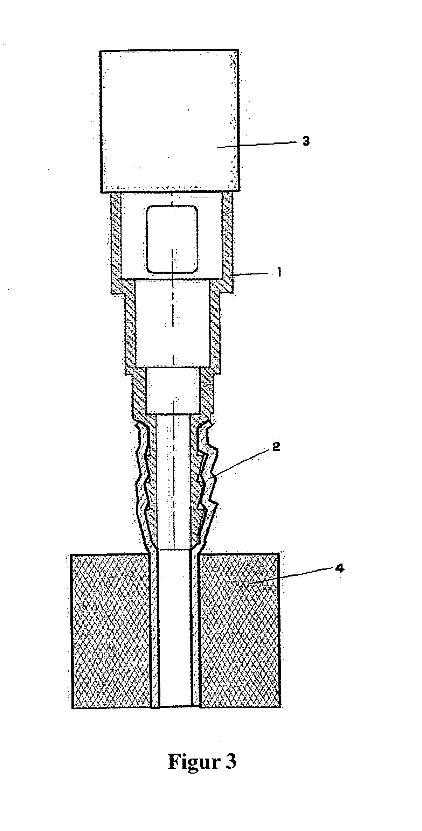

Die **Figur 1** zeigt die Ausgangsposition. Der Quickconnector (1) wird mit Hilfe der Ultraschallschweißmaschine etwas in das Rohr (2) eingetrieben; danach beginnt die Beschallung des Quickconnectors. Gleichzeitig mit der Beschallung wird der Quickconnector (1) weiter in das Rohr (2) hineingedrückt (**Figur 2**). Nach dem Schweißvorgang fährt die Sonotrode (3) wieder hoch und die Fixierung (4) für das Rohr löst sich (**Figur 3**). Besitzen Winkelconnectoren eine Auflagefläche für die Sonotrode, können auch Winkelquickconnector-Rohrverbindungen mit diesem Verfahren gefügt werden. In einer modifizierten Anordnung kann die Sonotrode auch in den Quickconnector hineinragen. Bei einer weiteren Ausführungsform kann der fixierende Block (4) an der der Sonotrode zugewandten Seite teilweise elastisch ausgeführt sein, so dass die Aufweitung des Rohres durch die elastischen Wände abgestützt werden kann.

Das erfindungsgemäße Verfahren lässt sich auch dann anwenden, wenn das Rohr nicht, wie oben beschrieben, auf seiner Innenfläche, sondern auf seiner Außenfläche mit dem anderen Kunststoffteil verschweißt werden soll. Dies kann notwendig werden, falls die Innenfläche eines Mehrschichtrohres sich - etwa aufgrund ihrer Materialbeschaffenheit - nicht für das Verschweißen eignet. Das zu verschweißende Rohr wird dann zweckmäßigerweise ausgesteift. Die Aussteifung kann beispielsweise aus einem Bördel bestehen, aber auch aus einer Wanddickenerhöhung, einer Verrippung, einer wellenförmigen Ausbildung des Rohrendes, einer aufgeschobenen oder fest angebrachten Stützhülse oder einem Stützring.

Vorteilhaft ist beim erfindungsgemäßen Verfahren die Tatsache, dass dabei zwei Verfahrensschritte gleichzeitig durchgeführt werden, nämlich das Eintreiben des Quickconnectors sowie die Herstellung der Schweißnaht. Die Schweißnaht entsteht ringsum zur gleichen Zeit, was bedeutet, dass die zu verbindenden Teile nicht um ihre Achse gedreht werden müssen. Die Umsetzung des Verfahrens erfordert keine neuen Geometrien und kann außerdem mit herkömmlichen Ultraschallschweißgeräten bei den üblichen Frequenzen durchgeführt werden, d. h. im Bereich von 15 kHz bis 1010 kHz und vorzugsweise im Bereich von 18 kHz bis 40 kHz.

## Patentansprüche

1. Verfahren zum Verbinden eines Kunststoffrohrs (2) mit einem Quickconnector (1) mittels Ultraschallschweißen,
**dadurch gekennzeichnet,**
**dass** die Schallwellen längs zur Rohrachse wirken, wohingegen die zu verschweißenden Flächen im wesentlichen parallel zur Rohrachse angeordnet sind, und weiterhin der Schweißvorgang mit dem Eintreiben des Quickconnectors (1) in das Kunststoffrohr (2) so kombiniert wird, dass die Beschallung zumindest überlappend mit dem Eintreiben vorgenommen wird, wobei während des Eintreibens eine Aufweitung des Rohrs (2) stattfindet.

2. Verfahren gemäß Anspruch 1,
**dadurch gekennzeichnet,**
**dass** die Beschallung im wesentlichen gleichzeitig mit dem Eintreiben vorgenommen wird.

3. Verfahren gemäß einem der vorhergehenden Ansprüche,
**dadurch gekennzeichnet,**
**dass** das Kunststoffrohr (2) ein Mehrschichtrohr ist, das eine Sperrschicht und/oder eine antielektrostatisch ausgerüstete Innenschicht enthält.

4. Verfahren gemäß einem der vorhergehenden Ansprüche,
**dadurch gekennzeichnet,**
**dass** das Kunststoffrohr (2) eine Kraftstoffleitung, eine Kühlflüssigkeitsleitung, eine Bremsflüssigkeitsleitung, eine Hydraulikflüssigkeitsleitung oder eine Scheibenwaschanlagenleitung ist.

5. Verfahren gemäß einem der vorhergehenden Ansprüche,
**dadurch gekennzeichnet,**
**dass** der Quickconnector (1) aus einem elektrisch leitfähigen Material besteht oder innen und/oder außen mit einer elektrisch leitfähigen Schicht bekleidet ist.

## Claims

1. A process for the bonding of a plastics pipe (2) to a quick connector (1) by means of ultrasound welding,
**characterized in that**
sound waves which act longitudinally with respect to the pipe axis are used, while the arrangement of the areas to be welded is substantially parallel to the pipe axis, and, furthermore, the welding procedure is combined with the forced insertion of the quick connector (1) into the plastics pipe (2) in such a way that there is at least some overlap between the exposure to sound and the forced insertion, widening of the pipe (2) taking place during the forced insertion.

2. A process according to claim 1,
**characterized in that**
the exposure to sound is substantially simultaneous with the forced insertion.

3. A process according to either one of the preceding claims,
**characterized in that**
the plastics pipe (2) is a multilayer pipe which contains a barrier layer and/or contains an internal layer which has been rendered antistatic.

4. A process according to any one of the preceding claims,
**characterized in that**
the plastics pipe (2) is a fuel line, a coolant line, a brake fluid line, a hydraulic fluid line, or a windshield wash system line.

5. A process according to any one of the preceding claims,
**characterized in that**
the quick connector (1) is composed of an electrically conductive material, or has been internally and/or externally covered with an electrically conductive layer.

## Revendications

1. Procédé pour l'assemblage d'un tube de plastique (2) avec un connecteur rapide (1) par soudage aux ultrasons,
**caractérisé en ce que**
les ondes sonores agissent le long de l'axe du tube, les faces à souder sont au contraire sensiblement parallèles à l'axe du tube, et en outre l'opération de soudage est combinée avec l'introduction du connecteur rapide (1) dans le tube de plastique (2), en effectuant l'irradiation aux ultrasons au moins en recouvrement avec l'introduction pendant laquelle un élargissement du tube (2) se produit.

2. Procédé selon la revendication 1,
**caractérisé en ce que**
l'irradiation aux ultrasons est effectuée sensiblement en même temps que l'introduction.

3. Procédé selon l'une quelconque des revendications précédentes,
**caractérisé en ce que**
le tube de plastique (2) est un tube à plusieurs couches, qui comprend une couche d'arrêt et/ou une couche intérieure rendue anti-électrostatique.

4. Procédé selon l'une quelconque des revendications précédentes,
**caractérisé en ce que**
le tube de plastique (2) est une conduite de carburant, une conduite de liquide de refroidissement, une conduite de liquide de frein, une conduite de liquide hydraulique ou une conduite d'une installation d'essuie-glace.

5. Procédé selon l'une quelconque des revendications précédentes,
**caractérisé en ce que**
le connecteur rapide (1) se compose d'une matière conductrice de l'électricité ou est revêtu intérieurement et/ou extérieurement d'une couche conductrice de l'électricité.
